# EUROPEAN PATENT APPLICATION

(11) **EP 2 546 788 A1**
(43) Date of publication of application: **16.01.2013**
(21) Application number: 11382234.0
(22) Date of filing: 12.07.2011
(51) Int. Cl.: G06Q 10/00

(54) **Integrated system and method for environmental sustainability management**

(71) Applicant: Simosa IT., S.A., 41014 Sevilla (ES)
(72) Inventor: Lobato Moreno, Alvaro, 41014 Sevilla (ES); Martinez Salcedo, Fernando, 41014 Sevilla (ES); Moriña Diaz, Jose María, 41014 Sevilla (ES); Sanchez Perez, Carlos, 41014 Sevilla (ES); Soriano Canela, José Pablo, 41014 Sevilla (ES); Cuesta Delgado, Cristina, 41014 Sevilla (ES); Delgado Rufino, José Manuel, 41014 Sevilla (ES); Collazo Sanchez, Pablo, 41014 Sevilla (ES); Bousoño Crespo, Carlos, 41014 Sevilla (ES)
(74) Representative: Temino Ceniceros, Ignacio

(57) **Abstract**

Integrated management environmental sustainability system and method that includes a server (4) connected to a plurality of work stations (1, 1', 1 ") , at least one per company integrated in the system; each of the work stations including means for entering data (2) and its submittal to the server (4) via a WLAN (3); and where said server (4) also includes a first means for accessing (100) the application on the server; a second means for administering (200) the application on the server, configured for managing the administrative data upon which the application is based; a third means for inventorying (300), configured for defining parameters and requests, and a fourth means for companies (400), where the sources and their emissions are contained as well as the means for calculating them.

## Description

This invention refers to a system and method for environmental sustainability management. Specifically, it refers to an integrated system that allows automating and structuring the capturing and handling of environmental sustainability data for a multinational company that is comprised of many companies, which in turn have different contamination emitting sources.

### Prior state of the art

To date, the capturing of data relative to greenhouse gas emissions or other data that may affect the environmental sustainability of a company was managed locally and manually using on site data capturing and manual calculations of its equivalent in kg of CO₂ emissions. Therefore, the technical problem that this invention must resolve is the automating, homogenization and optimization of contaminating emissions calculations for a company and especially for a multinational company with manufacturing centres and thus, emission sources that are geographically spread out.

The state of the art includes two documents that attempt to resolve this technical problem: US 2004/0249732 and international patent request WO 2005/114507.

The mentioned US document describes a distributed system for facilitating the creation of emission reductions projects and therefore, trade said emission reduction benefits. These benefits are based on the equivalent CO₂ calculation of the different emitting sources and can be sold in different size packages.

On the other hand, the international document describes a method and a device for collecting and storing environmental emissions data using a plurality of emitters in real time.

However neither of these documents satisfactorily describes a system or method that allows not only calculating and managing the data, but also be a complete sustainability tool, optimizing the handling of data under multiple circumstances. This tool, which is called SIGS *(Sistema integrado* de *gestión* de *sostenibilidad* / Integrated system for sustainability management), allows obtaining reliable and consolidated data related to sustainability in its economic, social and environmental dimensions.

### Description of the invention

As stated, the general technical problem resolved by this invention is the automating, homogenization and optimization of contaminating emissions calculations for a company and especially for a multinational company with manufacturing centres and thus, emission sources that are geographically spread out.

More specifically, the specific technical problem is formulated as the optimization of the environmental data record in a system distributed with multiple environmental source inputs and a single data output; in such a manner, that any emission from any emitting source is standardized into a single criteria.

More specifically, the system described in the invention is a distributed system, with a central server that is managed by the parent company and a plurality of workstations that report to said server. The emissions are integrated in the system in multiple ways, such as directly by importing data of a file generated in the emission source or by data entered directly by the user.

In general, the capturing of data is also automated at each plant or emitting source and this data is directly incorporated into a file, which is imported into the server application, which in a practical embodiment of the invention is a Web application.

More specifically, the system described in this invention includes:
a) A first means for accessing the server application.
b) A second means for administering the server application, where the usage and management of administrative data upon which the application is based are described.
c) A third means for inventorying, where the use and management of data for calculating the emissions, parameters and requests are described; and
d) a fourth means comprised of companies, which contain the sources and their emissions, including the imported ones.

The third means for inventorying has been included for the purpose of creating a tool that includes all the information regarding the environmental effort of the subsidiaries of a parent company as said information is generated, in a matter that allows having a unique and centralized database to cover all the environmental information reporting needs such as the annual report, EMAS (*emisiones atmosphericas* / atmospheric emissions) statements, environmental reports, etc.

These third means also includes a management of user permissions, common to all means that comprise the system. This allows creating a structure for managing the application with roles defined specifically for each phase or task.

The first step that must be completed in these third means is to identify what nodes of the functional organizational structure of the parent company correspond to a physical installation, which may have an environmental behaviour associated with it. Each subsidiary must identify its installations and characterize them by entering a series of general data: m2 of total surface, geographic coordinates, number of employees, etc. This is carried out by users that have an installations management role.

The functional organizational structure of the parent company is included in the tool and is a common item of all the modules that integrate the system.

A set of environmental aspects have been created in the tool, which allows covering all the required environmental indicators as well as the environmental sustainability indicators.

Each subsidiary has selected the environmental aspect subset that applies to them, they have assigned them as an environmental source for their installations and they have parameterized them. The parameterization consists of setting the characteristics of each source. Using the "water consumption" aspect as an example, its characterization consists of establishing the water source: Water from the grid, from a well, rainwater, etc, the usage of this water: process, cooling, sanitary, etc., and so on with a set of preestablished characteristics. This is carried out by users with an installations management role.

The fact that the set of possible environmental aspects is tabulated enables all the subsidiaries to name their environmental aspects the same way, which allows for subsequently consolidating and comparing this information with the parent or with each of the business groups.

These third means are not a reporting tool where the information is entered for specific periods; it is a system that allows entering the environmental information at the moment in which it is generated and to subsequently consolidate this information and calculate the equivalent emissions, in an optimal fashion, greatly improving the time that is currently employed for obtaining the report during a specific time period and thus resolving the aforementioned technical problem.

Each time that environmental data is available, a user with a "capturing" type role must enter it as an entry associated to an environmental source. In general, this data entry is automated by means of importing files with the emissions data, except in specific cases such as travel expenses (equivalent the emissions generated during the trip) or in specific details of the suppliers.

This information remains in pending validation status until any user with validation role approves the information, at which time the data switches to approved status and is used by the different reports that may be obtained from the application.

All the steps the data goes through: creation, validation, modification or deletion, are recorded in the tool with information about the date and user that executes the action, for the purpose of maintaining the proper traceability of the information.

In addition to specific environmental data, the application allows entering generic type information and analysis of the information such as for example, information relative to annual objectives, trend analysis, significance or materiality of the data, etc.

All the information included in the application may be exploited via the generation of consolidated or detailed reports. A wide variety of reports have been defined in order to satisfy the different information needs: reports for the annual report, reports for monthly management, reports for official statements, etc.

Since the information changes and estimated information may be entered and subsequently reviewed, the application includes a functionality that allows freezing the information at a specific instant and this fixed picture may be referred to afterwards to recover the information; this way, coherence of the data is maintained even when the data has been subsequently modified.

Thanks to the described system and method it is possible to, for example, automatically generate a corporate social responsibility report (required in many cases) taking into account the emission indicators and factors of the different sources, obtaining a global view of the emissions of the different sources of a company and of the different subsidiaries that comprise a parent company, globally establishing the emission characteristics and equivalent emissions in kg of CO₂ regardless of the size of the parent company, the geographic location of the different subsidiaries, the number of suppliers and, in general, of any other condition or emission source regardless of how insignificant it may seem.

A fundamental aspect for solving the technical problem is managing the sustainability indicators. The SIGS (Integrated System fort Sustainability Management) tool allows obtaining reliable consolidated information of the quantitative and qualitative indicators relative to sustainability in its social, economic and environmental dimension for the purpose of managing it properly and including transparent information in the Corporate Social Responsibility Report, which transmits confidence to the interest groups.

The reliability of the information requires a systematic consistency of the consolidated data, to be traceable or able to be reconstructed; they are exact and thorough in identifying and considering the data source.

The reception and consolidation of data consists of compiling the data for the established perimeter and treat it in a manner that they can be added and compared. For this, a series of general requirements and steps to be followed are listed below:
- All the data must be documented (mails, invoices, records, etc.). Therefore, data must not be collected via telephone, orally or by any other method that is not traceable.
- Every bit of data that is reported to the system must be accompanied by a series of minimum data called data+. These include basic information regarding the indicator such as the assigning of responsibilities and other data required for its traceability and it is an important mechanism for controlling them.
- The person responsible for capturing and calculating the data must decide what the best method is for obtaining the information according to each particular situation and following the guidelines established in the protocols.
- The methodologies and calculations required or obtaining the data is described in each one of the protocols. In those cases where the methodology described cannot be fitted to a specific situation or specific data is not available, an alternative methodology may be employed.

On the other hand, the consolidation of the indicators is carried out by directly adding the data relative to the subsidiaries that are part of the consolidation perimeter defined in each case.

The purpose of data capturing is to increase the degree of reliability and consistency in obtaining the data. Also, we must provide generic recommendations for those involved in calculating, capturing, validating, reporting, consolidating and controlling data for the indicators.

More specifically, in the corporate social responsibility reports (IRSC), the materiality is more complex than in the annual and economic reports. The RSC reports are not only focused on a single interest group (as in the case of the shareholders in the annual report); instead, they focus on several. The information to be included is less financial (and therefore a single currency does not exist) and in some sections more qualitative and is owned by several units or departments within the company. Even though in recent years the reporting criterion has been greatly improved; they are not as restrictive nor are they well defined as is the case of the financial aspects.

Therefore, when defining the materiality of issues for the IRSC, certain particularities must be taken into account. For example, the possibility of including aspects that go beyond the time limit of the previous year since sustainability issues and the company's life cycle go beyond the traditional reporting limits. The issues relevant in RSC can also be placed in interest groups throughout the value chain or even outside of it, demanding the rendering of accounts in aspects that are typically outside the financial consolidation perimeter. Likewise, in order to allow for greater clarity and prevent entering an excessive level of detail, differentiating by relevance in the communicating of mandatory issues between optional ones and those that are irrelevant.

For the purpose of this procedure, the following definition of materiality will be used:
- Materiality: Define the subjects or issues of the RSC such as those that may have a significant economic, environmental and social impact and which may result in an important difference in the organization's performance. The decisions, actions and judgments of the organization itself, as well as of its interest groups will be substantially influenced by the material subjects or issues.

In order to determine if an issue is or isn't material, the nature and the dimension of the analyzed aspect must be taken into account as well as the circumstances that will determine its omission. In order to make this decision, the methodology included in this procedure will be used. This is supported on two basis of analysis, which are crossed afterwards to obtain the final result. The two basis of analysis are:
- External factors: Those related to the expectations of company interest groups and how important these consider the different issues.
- Internal factors: Those that determine the importance of the different issues for the business, the company's management and lastly, the achieving of the business strategy.

During the materiality analysis, it is important to always consider what is the objective of the IRSC that is being drafted: Reflect in an integral manner, the actions taken by the company in regards to economic, social and environmental matters in a manner that responds to the expectations of the audience and contribute to generating confidence in the different interest groups.

### Analysis Procedures regarding Relevant Issues

To identify and draft a list of possible material issues depending on the importance these may receive by the part of interest groups, the following sources should be taken into account:
1) The international reporting standards, primarily the GRI, which through a list of quantitative and qualitative indicators directs which may be the material issues. Also, special attention must be given to standard AA1000 AS (2008), whose application as reviewed by third parties intends to increase the safety of the IRSC and provides adequate and quality information to the interest groups, who may understand the company's performance regarding the different aspects of the RSC. The list of subjects regarding these standards will be the starting point upon which to work in order to determine the relevant issues.
2) International initiatives. The adherence of the company to different international initiatives may vary throughout time. Currently, the organization subscribes to the United Nations World Pact and, since 2007, a "Caring for Climate" from this same organization. Usually, these and other voluntary agreements, through a set of principles, impose a series of commitments to the company, whose compliance is periodically evaluated; for example, in the World Pact each year through progress reports, which allows identifying new material subjects. The principles along with the related actions must be included in the IRSC.
3) Sector analysis. Annually, an analysis is carried out of the main homologous companies and of the competitors, nationally as well as internationally for the purpose of identifying those considered leaders in RSC to determine the main challenges of the relevant sectors in the different chapters of the IRSC. The number of companies to analyze may vary from one year to the next but normally it is between 4 and 8, according to how the market evolves and on the diversification of the company, so that all business lines have some reference to compare itself with.
4) Socially responsible investors. The demand for information regarding some of the main reference indexes such as the DJSI and the FTSE4Good, allow identifying which are the important issues for this interest group and remain a step ahead of future challenges. For this, a list of subjects asked about by both indexes hs been drafted. It is particularly relevant to take into account the issues that are identified as specific to the sector.
5) The press: By analyzing mentions of the company and homologous companies in the press, we identify what issues related to the RSC have received greater media attention (this analysis will be carried out mainly on written media). Special attention must be given to the news that may be negative in nature and may affect reputation, extended as an event that creates an impact in the press and which may simultaneously create negative chain reactions in some concurrent interest group. This analysis may be carried out quantifying the number of news bits by topics or subtopics, excluding those that refer exclusively to the financial results of the business.
6) Opinion of people reading the Report: The opinion of the previous year's readers regarding the IRSC will be taken into account when determining the materiality of the issues.

External factors selection procedure
1. After analyzing the reporting standards, the initiatives and the socially responsible investors, a list will be drafted by the company and for each one of its business groups that contains the most relevant issues for all of them.
2. Once this list has been drafted, it will be completed by adding the topics, which will be identified by carrying out an analysis of the press for the year in which the study is being conducted.
   For this, the analysis must identify and record at least the topic that a news bit is covering and the negative connotation of the news that may affect the company's reputation or that of its business groups, as the external factors analysis is being conducted for one or another organization.
   Economic type events will not be considered in the analysis (variable stock market quotation of the company, distribution of dividends, stocks, profits, small investments, etc.) are not considered in the analysis as well as other events that are not related with the issues in question.
   As a result of the analysis, the following will be obtained:
   - The topics to be included in the initial topics list.
   - A prioritization of the relevant issues taking into account the number of news bits that have resulted regarding a topic as well as the total number of negative news bits generated in the media.
3. For each one of the business groups, a sector analysis will be carried out of the information that the leading companies in each sector under RSC training are including in their corporate responsibility reports. At least 4 companies for each business group will be selected for the analysis. Once the companies have been selected, the corporate responsibility reports of each of them must be analyzed in depth in order to determine if the selected topics are relevant or not for them.
   After this analysis, the topics according to the number of companies that are including the topic in their reports will be prioritized for each sector. (Example: If for 3 of the 4 companies that include them, the corporate governance is relevant, 75% is assigned to that topic, while if the climate change is only relevant to two of them, a 50% will be assigned).
4. The treatment that a series of associations (prescribers) provides those sustainability aspects or identified corporate responsibilities will be analyzed. For selecting the organizations, whose criteria must be valued, the following will be taken into account:
   - That the organizations are independent and that they work in areas that are of interest to the company and its business groups.
   - That they are relevant for more than one company subsidiary or of its business groups and that they operate in more than one country.
   After the analysis, the prioritization will be carried out according to the number of prescribers providing relevance to the topic. (Example: If for nine of the ten prescribers, the corporate governance is relevant, 90% is assigned to that topic, while if the climate change is only relevant to two of them, 20% will be assigned).
5. After the sector analysis is obtained and cross-checking it against the valuation of specifiers, we obtain for the company and for each one of its business groups, a joint valuation of the topics, which weighted and scaled at 100% would comprise the ordinate axis (external factors) of the matrix.

The internal factors are extracted from the internal valuation of the external factors list, in addition to the internal valuation of relevant internal topics for the organization and its employees.

To select the internal topics, the RSC aspects, which are essential for the company or the subsidiary business groups, must be considered to successfully execute their business strategy at present and sustain it in the future.

Subsequently, an evaluation of the external factors and selected internal factors will be carried out.

For the purpose of demonstrating greater transparency and making it easier for the reader to understand the criteria for selecting the topics, a section shall be included in the IRSC, where the main processes that have been carried out for this purpose will be described. This section must provide information regarding the significant limitations that the process may have had.

As a general rule for each one of the material topics, at least one quantitative or qualitative indicator including it must be identified, which may be monitored in the future, without requiring having more than one indicator for each topic. The criteria to follow must be that the selected indicators provide answers to all the questions that are asked in the different topics.

In order to provide an answer to a relevant topic we must use:
- Quantitative performance indicators
- Qualitative type indicators
- Description of actions / specific projects
- Communicating decisions regarding future plans
- Stances, policies or management systems adopted by the company
- Decisions and reasoning for not taking action

In particular, the selection of qualitative indicators must consider the following criteria:
- The selected indicator must represent the performance of the company's subsidiaries or companies that are controlled by a subsidiary, or those to which the common management systems are applicable.
- The effort of acquiring and consolidating the required information is justified with the relevance of the topic to which the indicator responds.
- Sustainability reporting standards exist (generic, specific to a topic or sector) with quantitatively defined and generally accepted indicators, (GRI).
- There are specific indicators designed and described in this invention.
- The indicator must have an internal and an external utility:
   o External from the point of view that it is possible to generate a quantitative indicator that reflects the performance of the company and is extendable (and as much as possible, comparable) by the external audience of the IRSC.
   o Internal, from the point of view that the information regarding the indicator allows to better manage the topic, setting objectives, baselines, etc.

In the case of identifying quantitative indicators for which currently the required information is not being acquired, a documented working program must be established with responsibilities and deadlines for developing and future reporting of said indicators. Any new indicator to be developed must enter the system's indicator circuit for the IRSC and therefore it must include a protocol that defines it.

Throughout the description and claims, the word "encompasses" and its synonyms do not intend to exclude other technical characteristics, additions, components or steps. For experts in the field, other objectives, advantages and characteristics of this invention will in part be derived from the description and in part from placing the invention into practice. The following examples and drawings provide an illustration and are not intended to limit this invention. Additionally, this invention covers all the possible combinations of particular and preferred embodiments indicated herein.

### Brief description of the drawings

**FIG. 1** shows a general diagram of the client architecture - server that implements the system described in this invention.
**FIG. 2** shows a diagram with the essential steps to be taken by a user for accessing the system and which is described in this invention.
**FIG. 3** shows a diagram of the administration module, establishing the method implemented by this module, which is an integral part of the method described in this invention.
**FIG.4** schematically shows the method implemented in the inventory module of the system described in the invention and which is also a process implemented in the method and which is also described in this invention.
**FIG.5** schematically shows the method implemented in the company module of the system described in the invention and which is also a process implemented in the integrated management environmental sustainability method.

### Detailed description of an embodiment method

In a practical embodiment of the invention, the system is implemented and is accessed via the Web in order to quantitatively and qualitatively establish the greenhouse gases emitted by different sources, which are functionally as well as geographically separated; for example, different companies within a same multinational group, with different manufacturing and marketing centres.

For this reason, the implementation is carried out via Web, where the different users can enter all the information required for inventorying gases and thus the indexes required for assessing gas emissions and their implications can be calculated (for example, the purchasing of rights established under the Kyoto protocol), in order to subsequently be able to collect reports regarding these emissions in a homogenous format as well as other information relative to said inventory and emissions.

For this, the system and method of the invention will be explained in accordance with the following sections:
1) Access to the application.
2) Administration module, which describes the usage and management of the administrative data upon which the application is based on.
3) Inventory module, where the use and management of data for calculating the emissions, parameters and requests are described.
4) Company module, which contain the sources and their emissions, including the imported ones.

### 1. - Access to the system (100)

As indicated, access to the system is carried out via the Web since the main purpose of the system and described method is precisely the managing of greenhouse gas emissions in different sources, which are functionally (different physical emitters) as well as geographically (different emitting locations) separated.

In this description, system is defined as the system described in the invention itself. This system will be applied in a parent company. Or simply parent, which will be comprised of different subsidiary companies, or simply companies.

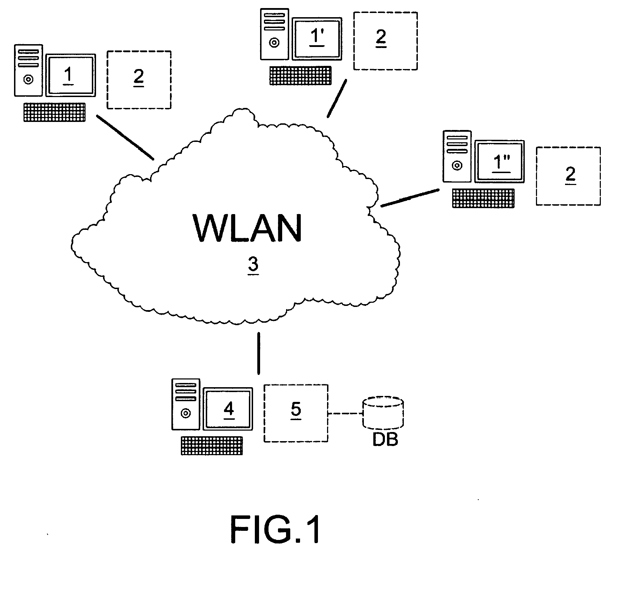

As can be seen in **FIG.1**, the system is comprised of a plurality of client stations (1,1',1''), each one of them including means for entering data; in this practical embodiment, an access via Web (2) or remotely via a WLAN (3) to a central server (4) that includes a computer application for managing the received data and a plurality of means (5) as described below.

At first, when the system is accessed, the user will be asked to identify himself for the purpose of maintaining security and restricting access to the application only for authorized users. Also, all the data will logically be shown in the language selected by the user during the access.

The first time a user attempts to access the system with his corporate network user name and password he must register himself and select the permissions required for navigating through the system. Once accepted in the system, he must request a specific role (set of permissions that are assigned to a user so each user represents a specific role as if it were a hierarchical organization), which will be associated to his user name. These roles can be order type; in other words, with a specific functionality or a society type; in other words, as belonging to a specific organization within the entire system.

When selecting roles, the following must be considered:
a) The required role must be requested; in other words, it requires a specific set of permissions included in the role.
b) The element type must be requested for the role that wants to be assumed. At this point there are two options, and depending on the selected role, the user will need to follow a specific application procedure within the system.
   a. Type of functional organization: This option is selected because the user desires to have the selected role for a specific company and therefore the entire functional organizational chart of the parent will be displayed in a lower panel, where the user must select the company or companies for which he is requesting the specific role.
   b. Order type: In the case that this type is selected, it will be understood that the user does not wish to have a role for an entire company but for one or several orders of a company. The consequence will be that the lower panel will display a dropdown where a company can be selected and a text box where the order code must be entered followed by entering the order and repeated for each order for which the role wants to be requested. At all times, the lower list will show the indicated orders for which the role is going to be requested, and if for any reason an order wants to be deleted from the list, deleting it from this list will suffice.
c) Once the company or companies, or the order or orders are selected, the required records will be added depending on the number of elements selected in the previous steps.
d) When the list has already been set and it contains all the roles for the companies and desired orders, the request must be sent to the system's server and it will be at that time that the responsible users will be informed of the request and the requester will remain waiting for these roles to be assigned to him and will be informed via e-mail when it occurs.

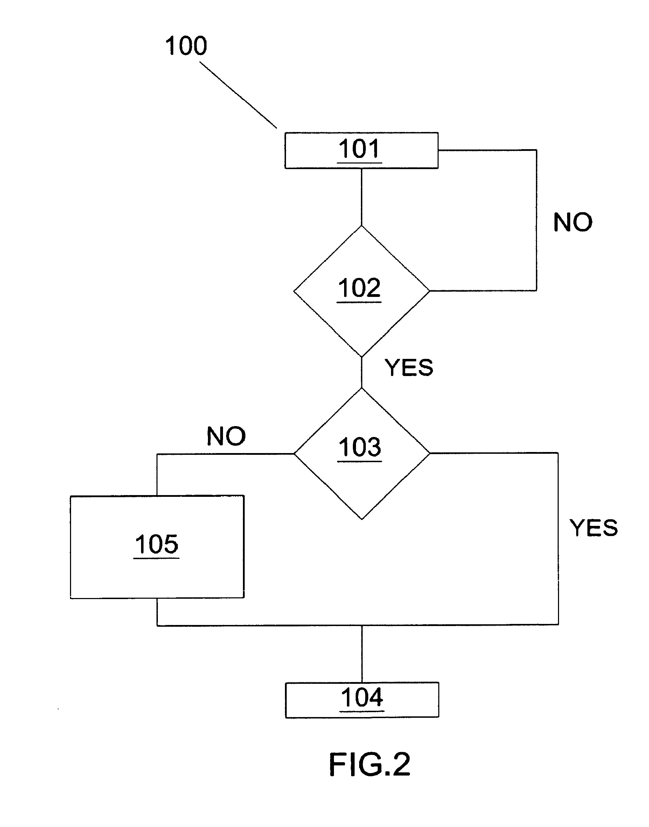

Specifically, and as can be seen in **FIG.2**, the access process (100) for a user to the system is initiated (101) with a user identification (102), in a manner that if it is positively identified, it is checked if it has been registered (103) in the system described in this invention.

In the case that the user is identified and registered, he directly begins to carry out his role with a list of sections (104), having access to the main body of the system; if the user is not registered in the system, then a specific role (105) is assigned to him according to the user category of the system, to also subsequently begin to carry out his role (104).

Once the access has been carried out as indicated, a list of sections is shown to the user, which he is authorized to access according to his role as well as the different alerts that are pending, of which he can access their information and in this manner, he will always be informed of messages generated by the application as a consequence of certain processes that are carried out by the rest of users, which require some type of monitoring on the part of the current user.

The application is based on listings to display the data in the lists and even though the data may be filtered, it's possible that the obtained result may contain a large enough number of records so that all of them cannot be displayed. To solve this inconvenience, the application will distribute the results in pages. To facilitate navigating between pages, a series of controls are available at the bottom of the list to move to the next or previous page as well as accessing the last and first page of the results list via a single step.

On the other hand, in the data entering forms as required, a tab will be available that includes the same fields that are on the form, repeated as many times as the number of available languages and the user at any time will have the liberty of entering data in several languages as well as his own.

It is worth highlighting that no translation will be mandatory and therefore they may be entered for one, several of no languages.

It is important to mention that in the forms that incorporate this tool, the data in the main tab will always be included in the user's language, which was set by the user at the login screen.

Due to the large number of screens and actions included in the application, a header with the most relevant data regarding the entry that is being carried out will be offered to the user for convenience and for information purposes; all data will be relative to the different application lists and on occasions relative to the forms.

### 2.- Administration module (200)

The administration module allows managing user access (data, roles and assigning of permissions), manage the classification groups upon which the inventory module will be based, view the available measurement units, control the consolidation periods, manage the selection tables, which include the quality indexes for the emission calculations and manage the different types of sources, which are associated with the possible gas emitting agents.

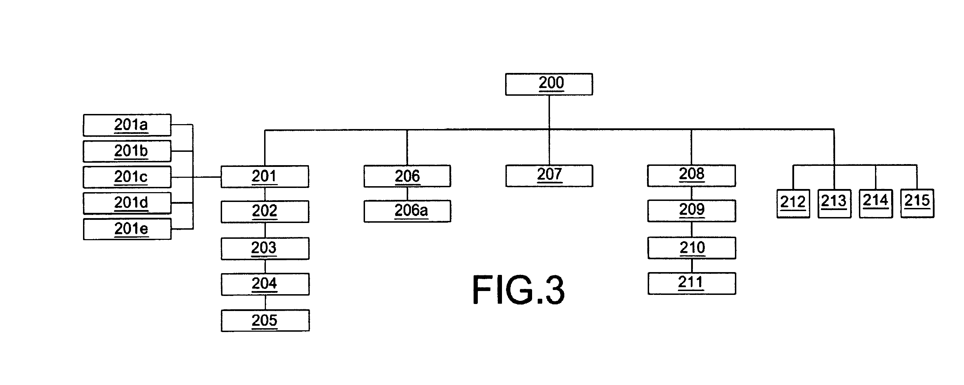

More specifically, and as shown in **FIG.3**, the administration process includes a first categorization group establishment stage (201), where at least the functional organization categorization (201a) related with the company are established, type of emission (201b) related with the scopes; type of gas emission (201c) related with the gases; geographic units (201d) related with countries; and of activities (201e).

After establishing the categorization groups, at least one company is established within the functional organization (202), with at least one company code.

Subsequently, an emission factor (203) is set, breaking down the emissions by scope (204). Finally, an expiration limit is set for the emission delivery authorizations (205).

After the company definitions, a user management stage is set (206), including the managing of the user roles (206a).

Likewise, a quality index (207) definition stage is set.

The process also includes a source definition stage associated with a type of source (208), which also includes the stages for entering a quality index (209), definition of a methodology (210) and definition of a consolidation period (211).

Finally, it includes the managing of catalogues stage (212), managing of the units of measurement (213), managing of travel expenses (214) to enter them as an emitting source; and managing of suppliers (215) to enter them as an emitting source.

First of all in this module, the categorization groups are established, which are nothing more than the name given to a set of elements, which have the element type as their primary and common characteristic. The types of defined groups are:
- Generic: For elements of unknown type.
- Functional organization: For companies, orders and generics.
- Type of emission: For scopes and generics.
- Type of gas emission: For gases and generics.
- Geographic unit: For countries and generics.
- Activity segment: For generics.

The categorization groups offer all the management required for the grouping the classifications. When accessing the screen, a list with all the existing categorization groups is displayed as well as a series of tasks such as: Add new categorization contact; edit new categorization contact, delete the categorization group and view the hierarchy of a categorization group.

The categorization groups can be filtered to only show those categorization groups that meet certain conditions.

In the hierarchy of a categorization group it is possible to view the hierarchical organization of all elements associated with the group. The hierarchical organization of all elements associated with the group will be displayed in this section. This organization is displayed in the form of a tree, which allows to better understand the relationships of the elements with each other.

The elements that may be parents of others are shown directly to the user and their contents may be viewed by requesting it directly.

The enabled actions vary according to the type of group; therefore, below is a list of all possible tasks that can possibly be carried out regarding the hierarchy of a group.

The possible accessible tasks, which may vary according to the type of group to which they belong are: add Company; add scope; add gas; add country; add element; edit element; permissions; and delete element.

A company is an element to which orders are directly associated. The parent company may have a specific stake percentage in the company, depending on the date. They are required to register an order since the orders must be directly or indirectly associated to a company.

Companies can only be added to Functional Organization type categorization groups and are organized hierarchically, allowing for multiple associations; this means they can be registered from a group of this type and within the group, they can be created from a generic element, or from a different company and at the same time be associated with other elements or companies.

To add a company, an element to which a company wants to be added must be selected. When adding the company, the following fields must be filled in: Name of the new company, brief explanatory description of the company and company identification code, which is useful for importing travel costs belonging to the company.

Subsequently, the emission factor and order planning level is reported; option, which if selected every time a new entry document is entered for the orders, it will be verified that all the items of the order are catalogued and with their corresponding emission factor and quality index.

On the other hand, the delivery of emissions broken down by scope is enforced in order to determine that the company must allocate its emissions breakdown by types. (Scope 1, scope 2, scope 3 and/or transport).

Finally, the expiration date of the emissions delivery authorizations (days) must be listed, which is a numeric field set in days to determine the time it will take for the authorizations granted to company suppliers to expire when labelling them as "Delivery of Emissions".

Also, an "Alternate codes" button is enabled, which allows setting more than one code for the company, for the purpose of establishing a direct relationship with the company data in other external applications; for example, the company may be identified in a management program (for example a SAP type program) with a code and in the invention with a different code and therefore, under alternate codes we would have to enter the code that is used in the management program in order to determine in the invention that it is the same company.

Likewise, a share percentage of the parent in the subsidiary can be identified in such a manner that it takes this index into account when calculating emissions.

Once the corresponding share percentages are obtained (if applicable) and the company data has been correctly entered, the new company will be entered into the system.

A scope element is that which is used to define the type of emissions generated by the sources, which can only be of three types: "scope 1" for direct emissions; "scope 2" for indirect emissions from generating electricity or thermal energy and "scope 3" for the rest of indirect emissions. The scopes can only be added to emission type categorization groups and they can be entered into the system within this group or directly associated to the group, or arranging them hierarchically based on generic type elements. The scopes entered into the system will be what the application will subsequently make available to users who register source types in order to define them based on the available scopes.

In spite of only having three types of scopes, the application offers the flexibility of creating several scopes for each type in order to offer a more thorough organization of the types of sources and therefore of the sources themselves.

Upon adding a scope, a scope name should be included, a description for it and the type it is classified under.

A gas is the element that determines the emission of a source. Gases may only be added to the groups that are registered in the application. Within the group, they may be registered directly from the group itself or arranging them hierarchically as practical based on other generic elements, for this, the application includes the possibility of including a more flexible organization of the gases. When registering a gas, apart from indicating the name and the description, a field is made available to indicate the heating factor of the gas. All registered gases will be available when registering source types and associating methodologies to them so the user that registers a new type of source into the application may specify the set of gases it emits and a series of methodologies to follow for calculating the emissions; these may be one or several per gas and afterwards, all sources that belong to this type of source will entail the emission of such gases.

To add a gas, the name of the gas must be included, a brief description and the global heating factor of the gas in order to obtain its equivalent CO₂ value required for calculating the emissions using equivalents.

A country is considered a categorized element used in the invention to place an order in a geographic location. A country can only be added to a geographic type group; in other words, to register a country in the system requires accessing the categorization group section and creating and/or selecting a geographic unit type group, access its hierarchy and once the hierarchy for the group is displayed, the country may be registered associated directly to the group, or if a more thorough organization is preferred, it may be registered based on any element of the hierarchy, either a country or generic type element.

When registering a country only the name is required; entering the description is optional. All the companies that are registered in the application are offered as possibilities when registering an order and specifying its geographic location; thus, the order can be linked to one or several country type elements, specifying the percentages.

Generic elements are registered based on any categorization group, regardless of the type. It is used to add elements of a type that cannot be classified in any of the existing types of categorization groups; another use is the flexibility of the hierarchical organization of the groups, which allows grouping other types of elements in generic elements.

To add a generic element simply enter the name of the element, a brief description and an element code, where this field will be viewed in the case that the element that is being handled belongs to a functional or geographical unit type categorization group, and where additionally, an element identification code is defined, which is used for importing travel costs belonging to that element.

Finally, it is worth highlighting that any element may be edited and/or deleted. Also, permissions may be granted to the elements but only in the case that the group for which the hierarchy is being displayed is of the "functional organization" type.

When accessing the hierarchy of a functional type organization, the window will be displayed with slight differences with respect to the rest of the groups because the elements that comprise these types of groups are displayed separately. A lower panel is available for the orders, which is updated as generic or company elements are selected, and contains the orders that belong to or are directly dependent of the selected element or company.

The possible tasks that can be carried out regarding orders are: Add an order, edit an order, delete an order and view permissions.

The orders can only be added to functional organizational type categorization groups. Each order must contain the name, a description, the order identification code, which is used for importing costs associated with the order and the order type, where the type in which the order is classified must be selected depending on the potential emitter of said order. Q1 are orders with direct CO₂ emissions that are equivalent to 1,000 tons per year; Q2 are orders with direct CO₂ emissions between 1,000 and 50,000 tons per year; Q3 are orders with direct CO₂ emissions between 50,000 and 500,000 tons per year; and Q4 are orders with direct CO₂ emissions greater than 500,000 tons per year.

Also, an "Alternate codes" button is enabled, which allows setting more than one code for the order, for the purpose of establishing a direct relationship with the data of the order in other external applications; for example, the order may be identified in the management application (ERP) with a code and in the invention with a different code and, therefore, under alternate codes we would have to enter the code that is used in the ERP in order to determine in the invention that it is the same company.

The order in question is associated to a plurality of geographic units belonging to the order, with a percentage that indicates the degree of connection between the order and said unit, which must add up to a total of 100%.

The elements contained in the different categorization groups are arranged hierarchically as shown, and the most intuitive way of displaying them is using a tree structure, regardless if they are companies, orders, gases or any categorization element, this means that all elements depends on another; in other words, all elements have a parent, which may be another element or directly the group itself and the elements may also have more than one parent, which means that a single element may appear as a son of several elements within the same categorization group. For this, the possibility of determining the degree of connection between elements and parents is available; for example, an element may be expressed as a son of a parent-element at 75% and of another at 25%.

Users in charge of managing the approvals of a specific level within the functional organization will be considered responsible users. When accessing responsible users, there are four primary components:
- One element to determine if the responsible users are going to be the same as those of the element that is immediately above it, or if by the contrary, they must be specified, in which case the following components are enabled.
- List for selecting the type of responsibility given to selected users, in other words, they may be responsible for approving new users and their permissions, general parameters for the entire parent company, parameters for specific companies or approve supplier authorizations.
- List of possible users to be selected as responsible users; first, all the users are listed but the possibility exists of entering the first name, last name, both or part of them and the list will automatically be filtered and will only show those users whose first or last name coincides with the name that is entered.
- List of users responsible for approvals, as users are selected, they will be entered into this list with the possibility of deleting those that have already been entered at any time.

The result of applying a series of responsible users that are a legacy from the upper element or are specified for the element in question will be that all approvals requested for the applicable level and depending on the type of responsible user, must be managed by one of the specified users, simultaneously generating a series of alerts in order to keep all involved users informed regarding the flow of approvals.

The access management governs all the accesses to the application in such a manner that the user may allow or restrict the entry or the use of the application to other possible users. This point controls: Users, users and interfaces, roles and permission for the roles.

From the user screen, the entire user database may me managed as far as creating new users, delete them, edit them and even edit the association of roles, which in the end, entails managing the access of said user to the application.

When accessing the user sub-section, a list of relevant data of all current users in the application will be displayed; also, this list may be filtered by login, first name or last names. A task menu is available at the top of the screen for managing the user database: Add new user; edit a user; delete a user; edit user roles; recalculate and recalculate user.

The recalculate option is required for a user to be able to manage other users. Thus, since the application is used simultaneously by many users and at different geographic areas world wide, it requires the user to manage other users and consequently to edit each of their permissions, determine at what moment the changes must be applied to affect each and every one of the active users at that time, a process by which all permissions are recalculated, the application is frozen for a short period of time and the tasks accessible to each user are reconfigured, which means that depending on the changed permissions, certain users no longer have access to parts of the application, which they previously had and vice versa.

The recalculate user option is the same procedure but with a single user selected.

The editing of user roles is a process by which you may associate or disassociate certain roles or set of permissions for a specific user; to accomplish this, first of all, the specific user, whose roles want to be managed must be selected. Subsequently, the roles may be handled, adding or deleting roles associated with that user.

The management of users is completed with the managing of users that access the application from other interfaces (for example an ERP) and its utility stems precisely in identifying, within the system described in this invention, what users are accessing the system through other interfaces.

Roles can be managed and created as needed. As previously discussed, a role is nothing more than the label that identifies a set of permissions. A new role may be added, a role may be edited or deleted.

All the roles can be associated with the different permissions. Groups per elements for the different permissions that exist in the application are available, where intersections are made between the specific permission of the element and the role, and at each intersection, there is a selection component, through which the association is determined. The available tasks are saving and recalculating.

Permissions may be removed or added to the roles. Once the desired associations are made, the changes are saved, which will cause the applied changes to be displayed on the screen and an informative message to appear, which will provide confirmation to the user that the changes have been carried out successfully.

Since the application is used simultaneously by many users and at different geographic areas world wide, it requires the user that manages the permissions by roles determine at what moment the changes must be applied and begin to affect each and every one of the active users at that time, a process by which all permissions are recalculated, the application is frozen for a short period of time and the tasks accessible to each user are reconfigured, which means that depending on the changed permissions, certain users no longer have access to parts of the application, which they previously had and vice versa.

If after changing permissions of roles, saved is pressed but the permissions are not recalculated, the changes will be applied as the different users connect to the application.

The tables for selecting the quality indexes (IC) are those offered at different points in the application, of which you can select the quality indexes of the data to be entered for calculating emissions and guarantee the quality of the data in accordance with the established table values. The options available to the user: New IC selection table; edit IC selection table; delete IC selection table and edit IC levels in a table.

To add a new IC table requires the following fields: Name of the table; descriptive text for the table; type of IC table where the utility used for creating the table must be selected; there are different types:
- Table for activity Data: If the values contained in the table are going to be used for assigning quality indexes to the activity data of the emissions.
- Table for parameters: If the values contained in the table are going to be used for assigning quality indexes to the parameters of the emissions.
- Table for manual Entries: If the values contained in the table are going to be used for assigning quality indexes to manually entered emissions.
- Table for conversions: If the values contained in the table are going to be used for assigning quality indexes to the conversions between magnitude units when emissions are entered.

Finally, a table can be associated to a description and more specifically to a conversion parameter. When data of emissions is entered of certain magnitudes, which need to be converted to other magnitudes for carrying out the calculations, there may be a need to facilitate some parameter required for making the conversion like for example, the density, to convert volume data to mass data. A data quality index must be indicated for these parameters, which will be taken from a specific table, which will be identified with a code selected from the dropdown list.

The IC selection tables will not serve any purpose unless they contain a collection of levels, since the quality index levels are the degree of quality of the data they are subsequently associated with. Therefore, the application displays a list with all the quality index levels contained in the table and a series of buttons for the management tasks for these levels. The possible tasks for these levels are: New IC level; edit IC level and delete IC level.

In order to add a new quality index to a table, the following fields must be filled in, such as the name of the level, descriptive text of the level and quality index, which is a numeric field which should indicate the quality.

The sources that generate emissions must be associated to a specific source type, where said type will determine the scope of the source in question and the possible methodologies that are available for carrying out the emission calculations.

The possible tasks to be carried out by the different types of sources are listed below: New type of emission source; edit an emission source; delete a type of emission source and edit methodologies of a source type.

In order to add a new type of source, the name of the source must be indicated, a description of the source and a scope; in other words, define one of the possible scopes of the source; enter a quality index (IC) and associate if with an IC table containing the different issue levels that are applicable to the already calculated manual task data entries, which allows deleting emissions from any parent subsidiary and is able to establish the company that generates the source emissions or even establish a company for each emission.

A calculation methodology is nothing more than a formula or way of calculating a specific emission, where required data to be entered is specified by the user when an emission is calculated. All types of sources must have one or more calculation methodologies.

The methodologies are associated to a specific type of gas and a source type may have different methodologies for the same gas.

A calculation methodology of a source type also determines what tables the quality indexes will be selected from for each data or parameter entered for the calculation.

The calculation methodologies associated with a source type are the ones that afterwards are offered as selectable options for each gas from a source of said type. The possible tasks to be carried out regarding the calculation methodologies are those mentioned below: New technology; edited methodology and delete methodology.

To add a new methodology calculation for a type source, selecting a gas will be mandatory as well as another list with existing methodologies.

Once the gas and the methodology is selected, the activity and parameter data used for the emission calculation for the previously selected methodology will be displayed and for each data or parameter, a dropdown list will be available to select the table from which the quality indexes for that data or parameter will be taken.

The only thing that can be modified of a calculation methodology are the IC selection data and parameters along with the information regarding the last change suffered by the methodology. Therefore, the required selections are carried out to modify the IC selection tables of the desired data or parameters.

If for any reason the gas or the methodology wants to be modified, the existing one must be deleted and it must be recreated, assuming all the consequences that such action would entail.

The deletion of a methodology will be an irreversible change.

The user may view a list of all the available units regarding the data for calculations, upon which the rest of the application is based. The list is displayed in read mode and therefore the function for creating new units, modifying them or deleting them will not be available.

The application allows establishing periods for carrying out the consolidation of emissions, in other words, they may be managed year by year; using simple operations, closed periods may be set in which new consolidations will not be allowed as well as open months in which they are able to be carried out.

Based on the above, by accessing the consolidation period screen is where a list can be viewed of all the years that have been managed up to now, divided by months and an inventory, specifying the status of each (open or closed). For greater convenience, a filter by year is available in order to locate a specific year as well as the actions that are mentioned and explained below: New consolidation period; edit the consolidation period and delete the consolidation period.

To add a new year, the user will be shown a window where the year to be created must be entered. If an existing year is entered, it will be displayed and it will act as if it were an action. A new window will be opened that will include the list of months and an inventory column where a cell will contain a selection component; a selection will entail a closed month for that inventory so an open month may be available for one inventory and closed for another. When the changes are saved, a new year will be generated in the list with the configuration open/closed by months and inventories that have been selected; also, a successfully saved informative text will be displayed on the screen. The window will not be closed in order to facilitate possible changes.

Via the "configuration" entry, an administrator will be able to set certain parameters and data upon which certain processes within the application are based.

Each dropdown list displays the options according to its meaning:
- Role for the responsible user of the imported order: Dropdown to select one from all roles registered in the application; the selected role will be the one assigned to responsible users for orders imported from external systems.
- Role for the authorized user of the imported order: Dropdown to select one from all roles registered in the application; the selected role will be the one assigned authorized users for orders imported from external systems.
- Source type for trips: Selection of a source type to be applied to sources created or managed due to the paying of travel expenses; in other words, the dumping of emissions that is carried out automatically by the application are assigned to certain sources, these sources may be created in the process and at the same time need to be associated with a specific type of source, which will determine the scope and the calculation methodologies to follow for calculating emissions.
- Source type for supplies: Exactly the same as the above but this time, the selected source type will be used for the emissions that are calculated for purchases.
- IC table for supplier of goods: Selecting the table that includes the possible issue levels for the emissions specified in the order entry documents, whose quality indexes are supplied by the supplier.
- Expiration limit for the emission delivery authorizations: Field where the number of days that must elapse prior to expiration must be set for the authorizations labelled as "Delivery of emissions" under suppliers. The number will be counted from the start date set by the user.
- Percentage of purchases exempt of emissions: This numeric field must set the percentage limit of exempt emissions; this value is not taken into account by the application, it is more like an informative piece of data.
- Percentage of emission exempt suppliers: Just like the one above, it will be the limit of suppliers exempt in the application and likewise, the value will only be used for information purposes.
- Maximum value of the purchases made from a supplier: To determine the maximum amount to purchase per supplier. Informative data.

Once all or some of the parameters have been determined, the changes must be applied by saving them.

The application allows managing catalogues of materials at a general level. In general, it is possible to register a catalogue of materials, view the catalogues of available materials, update a catalogue of materials and delete a catalogue of materials.

In general, a registered catalogue includes the following fields: Name, description, length of the classification keys, which is a numeric field that indicates the number of digits of the classification keys; an order conversion indicator that is selected if all the orders of products for a classification want to be modified when carrying out unit changes; the catalogue can also be blocked in cases where the possibility of managing the catalogue at the application level is not desired, with the consequence that items or classifications may not be entered.

A classification is a group of materials in a catalogue with common characteristics. The classification of materials belong to a specific catalogue of materials and are arranged hierarchically. For managing classifications of a catalogue of materials:
a) The materials catalogue is selected for he who desires managing his classifications.
b) The classification option is accessed.

From material classification it is possible to:
- Add a classification to the materials catalogue that is being worked with.
- Edit the information of a classification of the materials catalogue that is being worked with.
- Delete a classification of the materials catalogue that is being worked with.

To add a classification to the previously selected materials catalogue, first select the node of the classifications tree you wish to add the classification to in order to subsequently fill in at least:
- The classification key: Classification identification code.
- Name.
- Description.
- Unit of measurement: To express the materials contained in the classification.
- Exempt classification: When selected it indicates that its materials do not generate emissions or its emissions are already externally accounted for.

The tolerance for each company must be listed, where the tolerance indicates the degree of error allowed for the materials emission factor of this classification per each company.

To edit a classification of the selected materials catalogue, simply select the classification and modify the desired fields taking into account that none of the required fields may be left blank.

To delete a classification from the selected materials catalogue, simply select the catalogue and delete the item. Since this option is irreversible, confirmation will be requested for all deletion options.

To manage the materials of the selected materials catalogue, select the classification desired for managing its materials. It is possible to hierarchically display the classifications of the materials catalogue for which the managing is being carried out. Also, the classification materials that are selected will be displayed at all times. Finally, it is worth mentioning that each list may be filtered using specific parameters.

In this application module, the following is possible:
- Register a material for a specific classification.
- Edit the information registered for a material.
- Delete a material of a classification.
- Display the emission factors of the materials.

To only show those materials that meet certain conditions, filters may be used, which are available in this application such as: 1. Filtering by code; 2. Filtering by name; and 3. Filtering by description. For all three cases, the text field corresponding to the desired filter must be selected and the search text must be entered followed by filtering. With this, we will obtain a list, whose filtered field will contain the entered text. The filters may be combined in order to carry out more specific searches.

To add a material to a classification, select the classification desired for adding the material in question and enter the required fields such as the material identification key or code, including the name and description.

To edit the information of a material in a specific classification, on the other hand, the material that wants to be edited is selected and the desired fields are modified taking into account that required field may not be left blank.

To delete a material from a classification, select the classification from the materials catalogue that contains the material you wish to delete. Then, select the material you wish to delete and delete it after confirming the deletion.

To manage suppliers of a catalogue, simply select the desired catalogue containing the associated suppliers and access the suppliers.

In this module of the application it is possible to register a supplier for the selected catalogue, edit the information of a supplier, delete a supplier and a section where you can display the suppliers list from the selected catalogue.

In order to only display those suppliers that meet certain conditions, filters may be used, which are available in this module, which are filtering by key and by name. In both cases, simply select the text field corresponding to the filtering that wants to be executed and enter the search text and filter. With this, we will obtain a list, whose filtered field will contain the entered text. The filters may be combined in order to carry out more specific searches.

To register a supplier: First the supplier identification code fields must be requested and filled in as well as the name. Optionally, it may be indicated if it belongs to the same parent company or even a different department (internal supplier) within the company.

In order to edit the information for a supplier, select the material that wants to be edited and modify the required fields taking into account that required fields may not be left blank.

To delete a supplier from the system, simply select it, delete in and confirm the deletion.

Companies may be linked to a catalogue as well as delete links that already exist between companies and catalogues. In order to manage links of companies with a specific catalogue, first you must select the catalogue desired for managing the associated companies and then access "companies", from where the links between companies and the selected catalogue are managed. Specifically, the following may be carried out:
- View the companies liked to the selected materials catalogue.
- Establish a link between the company and the selected materials catalogue.
- Delete the link that exists between the company and the selected materials catalogue.

To link a company with the selected materials catalogue, simply access the company that is to be linked to the selected catalogue.

To delete the link between a company and the materials catalogue, the company is deleted and the deletion is confirmed.

The application allows managing the measurement units used for materials and classifications. From this tab, the following can be carried out:
- Register a unit of measurement.
- Display the list of the units of measurement that are available in the system.
- Edit information of a unit of measurement.
- Delete a unit of measurement from the system.

To register a unit of measurement in the system at least the unit key field must be filled in, which is the unit identifier field; name of the unit; description; if it is or isn't a currency type unit; that is, in the case that the currency value is expressed.

To edit the information of a material for a specific classification, select the line corresponding to the unit of measurement, whose information stored by the system you wish to edit and the proper fields will be edited.

Likewise, to delete a unit of measurement, simply select it and confirm its deletion.

The application includes the management of travel expenses, showing all the types, to which the users may allocate emissions and they will be displayed arranged by name and a toolbar will be available for the possible tasks to be carried out with the types. In the list, the type of existing travel expenses may be managed and they may be modified or deleted as required.

The possible actions to carry out are registering an expense, editing it and deleting it. Filters may be used to display only those travel expense types that meet certain conditions, which include (the name, description, travel expense type code and methodology).

For all four cases, simply select the text field corresponding to the filtering that wants to be executed and enter the search text and then filter it. With this, we will obtain a list, whose filtered field will contain the entered text. The filters may be combined in order to carry out more specific searches.

To add a new type of travel expense, the name used to identify the travel expense type, the text that describes the type of expense and the code that uniquely identifies the type of expense must be requested and indicated. Also, it will be determined if this type of expense allocates emissions, selecting the type of methodology, and it will display its emission factors, to which we must select a parameter to assign it to the aforementioned emission factor. For this, the parameters are accessed and one of them is assigned.

To modify a travel expense type, select the type of expense and modify the required fields.

To delete an existing travel expense type, simply select the expense type to be deleted and delete it after confirming the deletion. The deletion will be irreversible.

### 3.- Inventory Module (300).

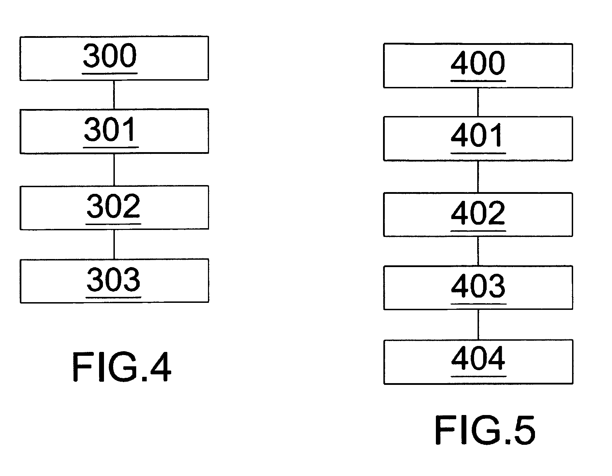

FIG.4 shows a diagram of the inventory process (300), which includes a first parameter definition stage (301) used for the methodologies at the time the emissions are calculated. Accessing the module you can create new parameters, to which a value may be assigned with their corresponding quality index, per each scope and origin of interest, this way, they may be selected and used afterwards for the parameters of the sources.

Subsequently, (302) the values, scope, origin, value and value of the table index are defined. Finally, it includes a report generation stage (303).

At the input of the inventory module, all important procedures for which the application has been designed may be accessed. From this input, the database manager for parameters, reports and list of requests may be accessed.

The module's parameters_DB (parameters database) input allows managing the parameters used for the methodologies when the emissions are being calculated. Accessing the module you can create new parameters, to which a value may be assigned with their corresponding quality index, per each scope and origin of interest, this way, they may be selected and used afterwards for the parameters of the sources.

The screen is comprised of a list that can be filtered with all the existing parameters and the buttons used for executing the possible tasks on parameters and the filtering fields for conducting searches are located on the upper part of the list.

The actions that are available for working with the database parameters are the following: New parameter; edit parameter, delete parameter and edit values.

To only show those materials that meet certain conditions, the available filters may be used (name and description).

For both cases, simply select the text field corresponding to the filtering that wants to be executed and enter the search text and then filter it. With this, we will obtain a list, whose filtered field will contain the entered text.

To add a new parameter, a new window will be displayed with the fields to be filled out required for the creation and its corresponding tab for the internationalization of data. Subsequently, at least the following fields will be completed: Name, description, unit (selectable between the existing and will be applicable for all its values), IC selection table (where the table that includes the quality indexes for the data entered for that parameter is selected).

After this action, the parameter registration screen will close and the list will be displayed once again but also, if we haven't filtered or we have a filter for the new parameter, it will be displayed in the list. Automatically and simultaneously, a screen will appear where values may be added to the parameter.

To modify a parameter, simply select the parameter and modify the fields as required. After this, close the screen and the parameter list will be displayed once again and in the case that no filter has been applied or it has been adjusted to include the new parameter, it will also appear in the list.

The steps for deleting an existing parameter are to select the parameter and confirm its deletion. The deletion of a parameter will be an irreversible change.

A parameter contains a series of values, each of them applicable to a scope and origin. To edit or manage the values, the parameter is selected and the editing of values is accessed.

The values associated with a parameter are the values used for the calculations with their corresponding quality indexes; only those values that must be approved by an administrator cannot be used.

A single parameter may have different values, one for each scope and origin it is applicable to. When accessing the parameter value editing module, a list will be displayed that includes all the values associated to the parameter selected in the previous screen, showing among the details, the last modification date of the value; those values that are pending approval will be marked and therefore they may not be used.

It is important to highlight that according to the permissions of the user accessing the application to add new values to parameters, these will be created directly or requests for these will be created and they will not be considered to exist until a requests manager accepts the corresponding value in question. The following actions may be executed on the values: New value; edit value; delete value and sources.

To add a new parameter value, a new window will be displayed with the fields required to be completed for the creation and the fields will be filled in, which include:
- Scope, in the form of a dropdown list from where to select a scope for which said value will apply.
- Origin: Origin of the parameter.

It is important to highlight that no more than one value with the same scope and origin may be added; when this occurs, the user will be notified that one of the fields must be modified.
- Value: Numeric field that indicates the value.
- ICvalue: Dropdown list from where the quality index of the previously entered value is selected.
- Justification: Text field for entering a reason for adding or modifying the value. Simultaneously, another possibility for entering a justification is offered by adding a file and/or document.

After this action, the value registration screen will close and the list will be displayed once again but also, if we haven't filtered or we have a filter for the new value, it will be displayed in the list.

To modify a value, simply select the value and modify the required fields. After this, close the screen and the values list will be displayed once again and in the case that no filter has been applied or it has been adjusted to include the new value, it will also appear in the list.

To delete an existing value, simply delete and confirm the deletion of the selected value; the deletion of a value will be irreversible.

A general view may be obtained of the gas emission sources that are currently using the value of the parameter; to accomplish this, only requires selecting the value in question and a list will be obtained from which it will be possible to edit the sources and edit the parameters.

By accessing the reports module, as indicated by its name, the user is offered the possibility of managing reports for dates and specific organizations of gas emissions generated by these organizations and grouped by scope. The available tasks are: New, delete, permissions, detail and view.

Currently, the reports list may be filtered by report name.

To generate a new report, a window will emerge for the requester, where the configuration parameters of the report must be entered.

In the emerging window, first the type must be selected, then the right hand dropdown list be enabled in order to select the report class within the type. A new tab will open at the bottom to fill in the report parameters.

Then, a name must be entered and indicate if the report wants to be saved. All the reports that should not be saved will be deleted after 25 days from their creation.

In the "Origin of Data" option, the type of filter to be applied to the report must be selected. For this there are two options:
a) Personalized filter: This option is selected if a new filter for the report wants to be created.
b) Consolidation Perimeter: This option is selected to apply a filter that has been previously created. To accomplish this, select an element from the table.

Once the filter type has been selected, the perimeters will appear loaded. You may add or delete filtering elements as required.

To delete an existing report, select the report and delete; after confirming the deletion, it will be deleted. The deletion of a report will be an irreversible change.

The visibility of the report may be set and decide what users may access the report. To accomplish this, the desired report must be selected and by accessing "permissions", select the available views.
- Public: Visible to all users that can access the reports list.
- Private: Visible only to the author user.
- User: Visible only to the author user and a list of users. When this option is selected, a dropdown list, from where users will be selected will immediately appear at the bottom as well as a button for adding users to the list below.
- Role: Visible to the author of the report and to all users that access the application with a specific role. When this option is selected, a roles dropdown list will appear at the bottom, from where the roles to be included in the view of the report may be selected and added to the list.

By selecting a report and accessing the "detail", the configuration parameters that were used at that time to generate the report may be viewed.

Once a report is selected and after pressing the "view" button, all the possible formats in which the report may be viewed will be displayed, after selecting the format, a few moments will elapse in which the report will be generated in the selected format and it may be viewed in real time.

In order to carry out personalized consolidations, the application provides the option of creating perimeters by which to carry out the consolidations or emissions; this way, these perimeters can be applied when desired and in this way, a personalized consolidation may be achieved.

The main consolidation perimeters screen is comprised of a list of all perimeters registered to date, which may be viewed y the application user.

It is important to highlight that depending on permissions of the user accessing the application, he may or may not add new perimeters.

To show only those perimeters that meet certain conditions, filtering by view, which is available in this module may be used. This may be accomplished by simply selecting a value.

The following actions may be executed on the consolidation perimeters: New Perimeter, edit perimeter, delete perimeter, configure and permissions.

To add a perimeter, when accessing the option, a new window will be displayed with the fields required to be completed for the creation such as the name of the perimeter and its description.

After this action, the value registration screen will close and the list will be displayed once again but also, if there is no defined filter or we have a filter for the new value, it will be displayed in the list.

To modify a perimeter, the perimeter that wants to be edited must be selected from the list and the required fields modified. After this, close the screen and the perimeters list will be displayed once again and in the case that no filter has been applied or it has been adjusted to include the new value, it will also appear in the list.

To delete an existing perimeter, simply select it and confirm the deletion of the perimeter. The deletion of a value will be an irreversible change.

Through the permissions of a consolidation perimeter, the view and subsequent use of that perimeter will be managed for the rest of the users.

The application allows viewing the list of all requests generated by the user up to now, classify them by status such as those pending processing and those already accepted and/or rejected, as well as view them in detail and manage them (accept and/or reject) directly. The list allows carrying out searches by applying the available filters:
- By date: Entering the start and/or end date to obtain the requests included within this range.
- By status: Requested, Approved or Rejected.
- By type: Where it specifies what was requested in the request, either register, cancel or modification.
- By type of element: For filtering by requested element, in other words, to obtain the requests of parameter values or authorizations.

The only available action of this screen is to view the detail, where a new window will emerge, which will show the most relevant data from the request such as the user that requested it, the type of request and what was requested. In addition to all of this, only via this new window is where you may accept or reject the request and a text box will be available to enter a justification for the acceptance or rejection.

### 4.- Companies Module (400)

FIG.5 shows the company process (400), which comprises at least a first emission source definition stage (401), where the sources are considered like all separately identifiable elements at a location or company, capable of emitting greenhouse effect gases and which must be considered for the estimations and calculations of emissions; subsequently, a gas data entering (402) and a source parameter management (403) stage are set for establishing the emission calculation (404).

It may be possible to view as many company modules as companies allow managing the application. Each company module it works with will allow independently managing all the sources and emissions of the company.

Thus, each company module includes the following inputs:
- Company
- Hierarchy
- Users
- Orders
- DB Parameters
- Sources
- Templates
- Travel expenses.
- Imports.
- Purchases and supplies: (Optional) If the company does not have a catalogue, this input will not exist. The Purchases input also includes the Materials, Orders, Suppliers, Pending suppliers, Classifications, Transfers, Imports, Unit, Exempt monitoring and Deviations in emission sources.

Each one of the previously described inputs allows managing the information of the associated company.

To load a company in the application menu, simply access one of them and select it.

The purpose of accessing the hierarchy is to make it easier for the user to get a general view of the company within the functional Organization of the group; in other words, the same window described in the Categorization Group Hierarchy section is accessed so the organizational structure that depends on the company will be viewed; in other words, the elements that comprise it, including its orders and depending on the permissions used by the user to access the system, he may even manage the structure.

User access allows accessing the list of all users that work in some fashion (with a certain role) with that company.

The list and its management is exactly as described in the previous section for users with the only difference that the list now includes a filter showing only the users for the company in question.

The entering of orders based on a company shows a complete list of all the orders that belong to that company.

The possible actions are practically the same as in the list where the orders are viewed when accessing the categorization group of a functional organization, except for the button that allows adding an order because when the new order is created, it can be created for a company or for some element contained in the company; therefore, creating new orders can only be accomplished by accessing the functional organization group and specifying what element of said hierarchy is to be entered.

Likewise, the list of sources associated directly to an order can be accessed by previously selecting the order, whose sources want to be viewed and the previously mentioned list of sources will immediately emerge filtered by the selected order.

The possibility of importing orders from an external document is also available. For this, a file must be imported that includes the following parameter:
- Order key: Will indicate the identification key or code of the order.
- Order type: To specify the type of order according to the emissions it generates (Q1, Q2, Q3 and Q4)
- Name of the order
- Description
- Categorization key: Will be the company code or key or element of the functional organization it belongs to.
- Categorization Name: Name of the company or element of the functional organization it belongs to.
- Geographic unit key: Key or code of the country it belongs to.
- Geographic unit name: Name of the country it belongs to.

Once all the document fields are filled in, they can be loaded into the application.

By entering DB parameters you can access the list of parameters and values available for the specific company, which means that the general parameters as well as those created and/or used by the company will be displayed.

The managing and operation of the lists is the same as previously described in DB parameters.

If any of the general catalogue values is modified, it will then belong to the company parameters catalogue but a request is generated of the new value, and the user responsible for the general parameters list will decide if this value should be included in the general or if by the contrary it will be used exclusively by the requesting company.

The first tab (Generic - value data) shows the general values; in other words, the values of the parameter in the general catalogue, while a second tab (Company - value data) is where the values used by the company may be specified, these last ones enabled so they can be changed; also, a "Respond/Do not Respond" button will be added, which means that the company will now have its own general parameter value and the consequence of this will be that any change applied to the general value will not affect the company value because they are merely copies.

Like all identifiable elements, sources are considered separately at a location or company, capable of emitting greenhouse effect gases and which must be considered for emission estimations and calculations.

Via source entries, the different sources could be managed as well as the parameters for its calculation methodologies and entering data for its emissions.

Once the sources are accessed, a list with all the company's sources will be displayed on the screen and a series of buttons at the top with all the possible actions that can be executed on the sources.

The sources possess a status that helps managing them. The possible statuses are:
- Pending configuration: Indicates that the source must be categorized in the activity and generic segment groups that exist in the application's database and also its parameters do not have a value.
- Pending Parameters: When one or several of its parameters do not have a value.
- Parameters with an Incorrect Country: When one or several values of its parameters are of a scope or origin that does not correspond to the location of the order to which the source belongs.
- Pending Categorization: When categorization groups exist that are generic or activity segment type where the source is still not classified.
- Complete source.

The possible actions are:
New source
Edit Source
Delete Source
Hierarchy of the Source
Editing of Source Parameters
Source Emissions
Create as a Template
Create from a Template
Associate Sources

In order to only show those sources that meet certain conditions, filters can be used, which are included at the top part of this screen following the actions menu (filtering by order, scope, name and description).

For all cases except for the order, simply select the text field corresponding to the filtering that wants to be executed and enter the search text and then filter it. With this, we will obtain a list, whose filtered field will contain the text or selection. The filters may be combined in order to carry out more specific searches.

The order filter field includes a second and very important functionality, which is the moment in which the new source shall be registered, when it is required to determine to what order the source in question is to be associated with.

Prior to creating a new source, we must determine to what order it is going to be associated with; this requires selecting the order using the same field that was used for filtering by either entering the order code and pressing the green icon or if the code is unknown, pressing the search looking glass icon to search the order within a list.

In steps for adding a new source we must take into consideration the following fields:
- Name: Name used to identify the source.
- Description: Test that describes the source.
- Inventory: Inventory, which the emissions source is associated with.
- Source type: Dropdown list of all the types of existing sources, from which one must be selected. Selecting the type of source will have direct consequences on the source as far as the scope and the gases with their emission calculation methodologies is concerned.
- Scope: Informative field that indicates the scope of the emissions according to the type of source that is selected.
- Scope Type.

After this, all data of all the gases emitted by the source must be filled in according to the type it has been classified as, each with a dropdown list from where to select one from all the possible applicable methodologies fro that gas depending on the source type.

Also, an option is available that allows to subsequently group several pieces of activity data into one, when allocating new emissions to the source (valid only in the case that the selected methodology or methodologies contain a single piece of activity data) and set the magnitudes of activity data used in the calculations.

To modify a source, simply select the source and modify the required fields (except the source type field which is a major modification that could generate inconsistent data in the system). After this, close the screen and the source list will be displayed once again and in the case that no filter has been applied or it has been adjusted to include the new parameter, it will also appear in the list.

To delete an existing source, simply select it and confirm the deletion. The deletion of a source will be an irreversible change.

Via the source hierarchy action we can associate a source to generic type and activity segment type categorization group elements. By accessing this option, a new screen will appear that will allow managing the links that the source has with different generic hierarchy and activity segment elements.

To edit the source parameters, simply select the parameters and the required actions to modify the selected source parameters will be displayed.

In order to manage the emissions of a specific source, select the source and accessing its emissions a screen will appear that allows carrying out all the required actions on the source's emissions.

The application allows creating a template based on a specific source to be able to repeatedly create new sources and not have to enter a lot of common and repetitive data; to accomplish this, the possibility of selecting a specific source is available and based on this source, create a template with all of its data such as the source type, the gases it emits and the methodologies to follow for calculating the emissions of each gas. If a source is associated with others, templates will also be created for them.

On the other hand, the application allows associating sources. The source association process allows simplifying the entering of emissions in similar sources. With this, sources that meet certain conditions may be associated with each other to subsequently when allocating emission to one of them, they are automatically allocated to its associated sources.

The conditions that must be met by the source to associate are:
- Possess a gas with a single activity data or several gases with their grouped methodologies and with a single gas for each of them.
- The Activity Data must be expressed in the same unit or it must be set for the same unit.
- The IC for the activity data must be extracted from the same issue level table, which entails that the source types they belong to must have the same tables set in the Activity Data.

To associate sources, the source that wants to be associated with others must be selected. The application itself monitors the association conditions, not allowing it in the case of non compliance with the aforementioned conditions. Subsequently, a new window will emerge where the associations for the source can be set. The available sources will be those that are not associated with others. In the case that associating with associated sources is desired, select on of the associated sources, access its associations list and add the source in question. A source may only belong to one association at a time.

Disassociating sources may be accomplished in two different ways:
- Deleting all the associated sources from its associations list.
- Accessing the associations list of any of them and delete the source in question from the association.

When disassociating a source, the rest of associated sources continue to be associated with each other.

In managing the hierarchy of a source and at the moment in which a source is registered, it is associated internally with a function organization element, a geographic unit element, with certain greenhouse effect type gases and to a type of emission but the user will have to manually specify the classification of the source within the activity segment type hierarchy and the generics that exist, for which a screen is provided. The other categorization groups to which the source is automatically associated when it is created may also be displayed, although they may not be changed.

A list is accessed showing the categorization groups to which the source has already been associated and buttons are available at the top, which allow executing the pertinent actions for managing the hierarchy, followed by an informative panel with the source details.

The possible actions for managing source links with specific hierarchies are the following:
- New Hierarchy
- Delete hierarchy

For a new hierarchy or, in other words, adding a new link between the source and the activity or generic segment type hierarchical element, one of the activity or generic activity segment type that is shown in the top dropdown list must be selected, which will generate the displaying of the tree corresponding to the selected group. Subsequently, the tree element that wants to be associated to the source is selected and after this action, the hierarchy selection screen will be closed and the list will be once again displayed.

To delete a link between the source and an element of an existing activity or generic segment type categorization, simply select and delete, taking into account that the deletion is irrevocable. On the other hand, only links for activity and/or generic segment type groups can be deleted.

In managing of source parameters, the parameters of a source are provided by the methodologies selected for each greenhouse effect gas that is emitted by said source, so it will only be feasible to give values to its parameters but never create new parameters or delete them since these parameters are closely linked with the methodology that has been selected for each gas at the time the source was created. When accessing the window dedicated to managing the source parameters, a list will be displayed with all the required parameters as per the methodology selected for calculating the emissions grouped by gases and also, buttons are included at the top, which allow editing these parameters.

The values of the parameters that can be edited include at least the following:
- Quality index: Degree of reliability of the data
- Value: Value of the parameter
- Unit: Unit in which the value is expressed

After this action, the source parameter edition screen will close and the new list will be displayed.

A parameter of the source can be given a previously specified value as per the scope and origin. To accomplish this, the possibility of querying the previously entered parameters is provided through the "DB Parameters" menu and use some of them to give the same value to the parameter of the source, but it is important to take into account the magnitude used to express the source parameter in order to select a parameter from the database whose magnitude is the same or at least can be converted with respect to that of the source parameter.

In order to adopt a value that is already in the parameters database, said option shall be accessed, from which a new window will emerge for selecting a parameter from the database, comprised mainly of an informative panel with the details of the selected parameter, a field for carrying out a parameter search from the database by name, whose result is shown in a list located at the bottom of the screen; also, the possibility of adding a new parameter to the database or editing an existing parameter will be available. Subsequently, the parameter is selected from the desired database, from which the value will be extracted to assign it to the parameter of the source that is being edited.

The gas emissions from a source may be calculated or entered by the user. For managing the emissions of a source, a screen will be available, which is accessed from a selected source.

When accessing the emissions of a source, a screen will be displayed with multiple options for managing the emissions of a given source and a list of all the emissions registered up to that moment for said source, grouped by default, by magnitude, showing the total sum of all the emissions registered up to that moment.

The possible movements that can be carried out with emissions are displayed and explained below:
- New: To allocate an emission or allocate an activity data
- Edit Emission
- Delete Emission
- Recalculate Emission
- Details of the Emission

The emissions must be registered by specific dates and the emission activity data, classified by methodologies, from all those possessed by the source. These fields include at least the following:
- Date.
- Activity data where a field of this type will be displayed for each data required in the methodology of each gas emitted by the source.
- Numeric field that indicates the characteristic parameter of the source activity for said gas.
- Unit: A field of this type will be displayed for each activity data included in the methodology of each gas and it is shown as a dropdown list with all the possible units (those for which a conversion exists to the destination unit that is set for the methodology in question).
- IC of the Activity Data: A field of this type will be available for each activity data, where as its name indicates, the quality index of the entered data must be selected.

Depending on the selected magnitude, if to convert the data expressed in this magnitude to the corresponding destination magnitude established in the methodology for that data required an additional data (conversion parameter), the fields required for indicating parameters with their respective quality index selection lists will appear.

The manual entry allows the user to enter results of previously calculated emissions for the source and a specific date.

Just like with other application elements, the emissions may be edited and deleted.

The calculation of the emissions of a source is considered a complex process, which in specific circumstances it may be convenient for it to not be executed automatically; therefore, the total of an emission can be recalculated as required by the user, where the entire calculation process will be executed and the result will be updated on the screen.

Once the calculations of an Activity Data is entered, the status of the source may be displayed as well as the parameters, the values and the rest of data used by the application for calculating the emissions and thus have an idea of how the calculations of the emission displayed on the screen were carried out, since probably, it has not been recalculated since the last time even though certain values, units or even calculation methodologies may have changed.

All of this can be seen in the emission detail, which is a read only window that appears when the "Detail" button is pressed and lists the formulas and the data involved in the calculations per each gas that is emitted by the source.

### Example of the methodology used in the calculation of emissions

In this example, an emission calculation methodology will be shown that originates from the recovery of metal residues from steel production but evidently, the described methodologies are valid for any other type of emission from any other company.

The process referred to in this emission calculation methodology consists in recovering valuable metals (Zn, Cu, Mn,...) or the production of an intermediate product (for example, Waelz oxide, which is rich in Zn and may be recovered using electrolysis as well as other physical processes). The operational variations between products used for recovering one or another product are not significant from a methodology point of view for calculating emissions.

The process basically consists of loading an oven, which is normally a rotating type oven, with steel residues or dust and a reducing agent (generally coke or anthracite), next to other additives such as lime, limestone, agglomerates, etc, whose function is to improve the characteristics of the reactions and conditions these occur in.

The reduction conditions of the oven allows metals to be reduced to shapes that can undergo sublimation and be separated from the rest of the compounds (as occurs with ZnO) in spite that in other processes, the recovery of the product may respond to other principles.

In any case, the generated CO₂ emission calculation methodology responds to a balance of materials, in which the amount of carbon introduced with the residue as well as reducing agents and other reagents, and the carbon output of products and sub-products (for example, ferrosite) is considered.

The calculation equation is as follows:
CO2 emissions = 44/12 * [Q_{cal}*X_{C}- cal⁺Q_{reducing} agent 1*X_{C}- reducing agent 1⁺Q_{reducing} agent2*X_{C}- reducing agent 2⁺reducing agent 3 * X_{C}- reducing agent 3⁺ Qₛₜₑₑₗ dust *X_{C}- steel dust⁻ Q_{ferrosite}X_{C}- ferrosite^{―} Q_{product}*X_{C-} product- No. Of production hours* Q_{gases}*C_{co}- gases*^{12/28]}
Where:
Qi are "Lime consumption, reducing agent 1, reducing agent 2, reducing agent 3, steel dust" and "ferrosite production, product" and "output gases". All the previous cases are measured in tons, except Qgases, which will be measured in Nm3. It may be possible that a plant does not have more than one reducing agent, in which case the rest of the cells must be left blank.

Xi is the carbon content of each current. It may be entered as a decimal or as a percentage.

Cco-gases, concentration of CO in the output gases. It may be entered in the following units:
- mg/Nm3. In this case, the application divides it by 109 to convert it to tons of emitted gas.
- ppm (v/v). In this case, the application multiplies it by a correction parameter to convert it to mg/Nm3, which simplifies the calculation for any application user.

Thus, the calculation process begins by registering the source in the application. The type of source is selected; in this specific example "metal recovery. Mass balance", which results in the methodology and the parameters to be entered in the application to be defined by the application without needing any additional knowledge on the part of the user.

Subsequently, when defining the source, the units into which the user intends to include each parameter may be set. This can also be accomplished at the data emissions level, but when it is defined at the source level, subsequent errors are avoided.

As many entries as desired may be registered for this source. For example, include a monthly data, weekly data, etc, that allows calculating the emissions associated with this period.

In order to estimate the emissions for a specific period, the application requests the required data, with the units in which the data may be reported (this value may be set when defining the source).

Based on the entered data, the application calculates the associated emissions according to the formula defined for that specific emission source and which varies according to each company and/or emission source associated with the system. Following the same systematic, emissions for other periods may be entered and which must be considered.

Finally, the application defines the possible ICs (quality index. Proprietary index that represents the reliability of the data based on internally set requirements) of each parameter and calculates the final quality index of the emission. The source may be edited as many times as required if errors are identified in the entering of data.

The application allows the possibility of importing emissions. The imported emissions are associated with the corresponding sources and subsequently, the emissions of said source can be calculated considering these imports.

Imports regarding travel expense payments are considered new data activity entries for a specific source once the imported emissions have been calculated. The importing is an automatic process that is executed every certain amount of time and its purpose is to access the travel expense payment database and obtain new emissions generated by said travel.

The imports main screen shows all the imports carried out to date regarding travel Expense payments, arranged by date and also shows a button bar for the possible actions associated with said imports.

The templates list is displayed like the rest of lists in the application, with its corresponding filtering fields to facilitate the search.

The templates, as mentioned in the Sources section, are generally created based on a source but templates can also be created in the conventional way without directly being based on a source.

In the list, all existing templates may be managed and they may be modified or deleted as required. The possible actions are:
New Template
Edit Template
Delete Template
Edit Parameters
Associate Templates

Via the company purchase option, the catalogue linked to the company may be managed. The catalogue may be shared by several companies, which means that the changes made in this section will affect the rest of the companies.

Access to the list of units via the company's Purchase and supply module is nothing more than a direct access to the same list described in the administration module's materials unit section. The list shows the units available for the materials of the catalogue used by the company.

When accessing a company's classification entry, a list of all the classifications of said company is displayed.

In addition to the classification management functions, the "Recalculate FE Means" (emission factor) option is displayed. Via said procedure, the emission factor average of the selected category is updated. Generally, said process is carried out each time an entry document for an order is entered but it is offered to the user as another possible option to use for maintaining the data.

The application allows managing the associated company's orders in such a manner, that the relevant information for each order may be viewed, where the type of orders is worth mentioning. The types of existing orders are:
- Temporary Order: Corresponds to an order that has not yet been confirmed from the order generation external applications because its entry in the application catalogue is pending so each order line must be associated to a material in the application; this type of order has been entered as a step prior to the order confirmation for the purpose of requiring users to specify the material or corresponding classification in the application and thus be able to properly account for the emissions of said order.
- Order: That temporary order that has already been externally confirmed and means that it is already included in the application catalogue.
- Temporary Note Order: An order of this type is not yet confirmed because as mentioned in the Temporary Order, it must be included in the SYSTEM catalogue but unlike the Temporary order, it must not be included in the catalogue line by line associating it with a specific material, instead, it is entered in the catalogue at one level or more at a general level of all the order lines since it is not an order of a specific material; but of a
- Note Order: It is the temporary note order that has already been included in the catalogue at the classification level in the SYSTEM and, subsequently, it has already been externally confirmed.

It allows viewing the details of an order and assign materials and emissions to each one of its lines. Specifically, the application allows:
- Assign a material to an order line.
- Assign an emission factor to an order line.
- Global emission
- Justify and/or change the justification for carrying out an order.
- Recalculate Emission
- Authorizations
- Entry document
- Assign material

To assign an emission factor to an order line, the IC type of said emission, which may be calculated by the parent company must be taken into account, calculated by the end supplier or the intermediary.

The recalculation process offers the possibility of updating the emissions associated with the material if it includes changes that affect them.

Cases exist where the orders need to be confirmed and therefore need to be authorized; fact which is considered by the application.

Also, the application allows managing order entry documents such as delivery notes and invoices.

The application allows managing the bank of available suppliers for the selected company. This way it is possible to
- Register a supplier.
- Edit information regarding a supplier.
- Delete a supplier from the system.
- Manage authorizations associated with suppliers.

All of this directly related with the ERP program used by the parent company so that there are no types of incoherencies in authorizations and permits for suppliers. Therefore, if a supplier is cancelled in the application, the ERP will also be blocked and it will not be admitted again until its authorization is renewed.

In the list of pending suppliers, as indicated by its name, shows all the suppliers requesting access to the application through the company, therefore, a valid supplier will have access to certain information available to them in the SYSTEM portal. It is important to consider that a supplier may have more than one user, which means that once approved, all the users may access the application and access the corresponding information according to its permissions. The suppliers request permission to enter the different companies they have negotiated with into the application. Since the number of suppliers pending access to the system may be large, the user is offered a filter in order to decrease the number of suppliers to be displayed in the list.

It is possible to register material transfers carried out between orders and a company.

The inventory of the application allows importing information regarding materials and classifications from files with a specific format. The same thing occurs with the suppliers.

The application allows managing and monitoring emission factors that have exceeded the tolerance set for the classification. Only a list is shown that includes the emission factors that have exceeded said tolerance and the order and entry document data it is specified in. At the same time, access is allowed for:
- Accessing the selected factor's entry document.
- Accessing the order.
- Accessing and modifying the data of materials.
- Accessing and modifying the data of the Classification.

The limit criteria to be applied are configured at the application level.

## Claims

1. integrated management environmental sustainability method that includes a server (4) connected to a plurality of work stations (1,1', 1 " ), at least one per company integrated in the system; each of the work stations including means for entering data (2) and its submittal to the server (4) via a WLAN (3); and where said server (4) also includes a first means for accessing (100) the application on the server; a second means for administering (200) the application on the server, configured for managing the administrative data upon which the application is based; a third means for inventorying (300), configured for defining parameters and requests, and a fourth means for companies (400), where the sources and their emissions are contained as well as the means for calculating them;
**which is characterized because**
said first means (100) also include a first means for identifying and validating the user in the system, in a way that each user is provided with a specific role within the system;
and where said second means (200) includes at least means for categorizing each one of the companies integrated into the system, setting an emission factor and a scope index for each one of the emissions and a data consolidation time period;
where the third means (300) also include means for defining the parameters of each one of the companies and emissions; while the company module (400) includes means for calculating emissions according to the parameters, emission factors, scopes and consolidation periods, in a manner that sets a standard equivalent emission value.

2. Integrated environmental sustainability management method, implemented in the system of claim 1 that is **characterized because** it includes at least: (i) a first process of registering and entering users and assigning of at least one role per user;
(ii) a second process of administration, where each one of the companies included in the system is categorized, setting an emission factor and a scope index for each one of the emissions and a data consolidation time period;
(iii) a third inventory process configured for defining the parameters of each one of the companies and emissions defined in the second administration process;
and (iv) a fourth company management process, which includes at least one emission calculation stage according to the parameters, emission factors and consolidation periods, in such a manner that a standard equivalent emission value is established.

3. Method in accordance with claim 2 where the first user registering and entering, and role assigning process is initiated (201) by identifying the user (202), in such a manner that it is positively identified, it is verified that it is entered (203) in the system described in this invention; and where in the case that it is identified and entered, said user directly begins to carry out its role with a list of sections (204), having access to the main body of the system; while if it is not entered in the system, then it is assigned a specific role (205) according to its category as a system user, to also subsequently begin to carry out its role (204), showing the user a list of sections it is authorized to access according to his role as well as the different alerts it has pending, being able to access their details.

4. Method in accordance with claims 2 and 3 where the administration process (200) includes a first stage for establishing categorization groups (201); a stage for establishing at least one company within the functional organization (202), with at least one company code; establish an emission factor (203), breaking down the emissions by scope (204); and setting a limit for the number of emission delivery authorizations (205).

5. Method in accordance with claim 4 where at least the categorization groups are established for: Functional organization (201a) relative to the company itself, type of emission (201b) relative to the scopes; type of gas emission (201c) relative to the gases; geographic units (201d) relative to countries; and activity (201e).

6. Method in accordance with claims 2 to 5 where the administration process (200) includes a user management stage (201), including the management of the roles of said users.

7. Method in accordance with claims 2 to 6 where the administration process (200) includes a quality index definition stage (207).

8. Method in accordance with claims 2 to 7 where the administration process (200) includes definition stage of the source associated to a type of source (208), where said type of source will determine the scope of the source in question and of the possible methodologies offered for carrying out the calculation of emissions, and where a quality index entering stage (209), methodology definition stage (210) and definition of a consolidation period stage (211) are also included.

9. Method in accordance with claims 2 to 8 where a scope index is that which is used for defining the type of emissions generated by the sources and can only be of three types: "scope 1" for direct emissions; "scope 2" for indirect emissions from generating electricity or thermal energy and "scope 3" for the rest of indirect emissions; and where the scopes can only be added to emission type categorization groups and they can be entered into the system within this group or directly associated to the group, or arranging them hierarchically based on generic type elements, and where the scopes entered into the system will be what the application will subsequently make available to users, who register source types in order to define them based on the available scopes.

10. Method in accordance with claims 2 to 9 where a gas is the element that determines the emission of a source and which includes a heating factor for the source, and where all registered gases will be available when registering source types and associating methodologies to them so the user that registers a new type of source into the application may specify the set of gasses it emits and a series of methodologies to follow for calculating the emissions; these may be one or several per gas and afterwards all sources that belong to this type of source will entail the emission of such gases.

11. Method in accordance with claims 2 to 10 where the administration process (200) includes the managing of catalogues stage (212), managing of the units of measurement (213), managing of travel expenses (214) to enter them as an emitting source; and managing of suppliers (215) to enter them as an emitting source.

12. Method in accordance with the previous claims where the tables for selecting the quality indexes (IC) are those offered at different points in the application, of which you can select the quality indexes of the data to be entered for calculating emissions and guarantee the quality of the data in accordance with the established table values; and where said tables include a collection of levels since the quality index levels are the degree of quality of the data, they are subsequently associated with.

13. Method in accordance with claims 2 to 12 where the calculation methodology is a formula or calculation algorithm for calculating a specific emission, where required data to be entered is specified by the user when an emission is calculated; and where all type of sources must have one or more calculation methodologies, where said methodologies are associated with a specific gas; a calculation methodology of a source type also determines what tables the quality indexes will be selected from for each data or parameter entered for the calculation.

14. Method in accordance with claims 2 to 13 where the inventory process (300), which includes a first parameter definition stage (301) used for the methodologies at the time the emissions are calculated. Accessing the module you can create new parameters, to which a value may be assigned with their corresponding quality index, per each scope and origin of interest, this way, they may be selected and used afterwards for the parameters of the sources; and where subsequently, (302) the values, scope, origin, value and value of the table index are defined; and where also, it includes a report generation stage (303).

15. Method in accordance with claims 2 to 14 where the company process (400), which comprises at least a first emission source definition stage (401), where the sources are considered like all separately identifiable elements at a location or company, capable of emitting greenhouse effect gases and which must be considered for the estimations and calculations of emissions; subsequently, a gas data entering (402) and a source parameter management (403) stage are set for establishing the emission calculation (404).

16. Method in accordance with claims 2 to 15 where the sources are associated internally with a function organization element, a geographic unit element, with certain greenhouse effect type gases and to a type of emission.

17. Method in accordance with claims 2 to 16 where the parameters of a source are provided by the methodologies selected for each greenhouse effect gas that is emitted by said source, so it will only be feasible to give values to its parameters, with said parameters closely linked with the methodology that was selected for each gas at the time the source was created.
